# EUROPEAN PATENT SPECIFICATION

(11) **EP 1 447 011 B1**
(45) Date of publication and mention of the grant of the patent: **14.11.2007**
(21) Application number: 02024760.7
(22) Date of filing: 06.11.2002
(51) Int. Cl.: A23L 1/18, A23L 1/164, A23L 1/168, A23L 1/275

(54) **Breakfast cereals**
Frühstückszerealien
Cereales pour petit-dejeuner

(43) Date of publication of application: 18.08.2004
(73) Proprietor: Nestec S.A., 1800 Vevey (CH)
(72) Inventor: Hoitink, Robert, 1009 Pully (CH); Guex, Claude, 1400 Yverdon-Les-Bains (CH); Voisin, Isabella, 1132 Lully (FR)
(74) Representative: Schneiter, Sorin

(56) References cited:
- US-A- 4 755 390
- US-A- 5 894 027
- US-A1- 2001 008 646
- US-B1- 6 270 818
- US-B1- 6 495 179

## Description

The present invention relates to a cereal-based product, which changes or loses colour upon addition of an aqueous liquid. The invention further relates to a process for obtaining the product and to a breakfast cereal comprising two types of cereals. The invention further relates to the use of colour changes in breakfast cereals.

### The Background Art

Especially for kids meals such as breakfast or in-between meals do not always serve the sole purpose of providing nutrition. Much to the contrary, consumption of food is increasingly linked to other positive sensations. For example, the uptake of food may be accompanied by surprise, adventure and pleasure. In other words, eating should be fun. In still other words, good food - good life.

Especially with breakfast cereals intended for children several efforts have been made to arouse the curiosity of the consumer by animating or modifying the known and for children often boring way of having breakfast.

For example, in US 6,270,818 (QUAKER OATS) an animated food is disclosed. The food comprises an inner and an outer mass, whereby the outer mass disperses upon addition of liquid and reveals the inner mass, which has a different appearance than the inner mass. The inner mass may have the form of a dinosaur.

Furthermore, US 6,207,216 (GENERAL MILLS) teaches a quickly dissolving aerated food product, in particular marshmallow pieces. These confectionery products may have a quickly and a slowly dissolving portion, whereby a quickly dissolving shell surrounds the slowly dissolving portion that can have the shape of a small baby animal.

US 5,894,027 discloses a breakfast cereal product which is coated with an adhesive material onto which a further powder or slurry is coated.

Although the above mentioned products are probably very interesting for children, they are very complex to manufacture and therefore expensive.

It is an object of the present invention to provide surprise and pleasure during consumption of a cereal-based product in a simple way. In particular, it is an object to provide a breakfast cereal that surprises the consumer and is particularly interesting for children.

It is a further object of the present invention, to provide a cereal-based product that changes colour upon addition of aqueous liquids, such as water, milk or reconstituted milk, for example.

It is still further an object of the present invention to provide a cocoa-coated cereal-based product wherein the cocoa is essentially washed away upon addition of an aqueous liquid to the product and a white or different colour of the product becomes visible.

### Summary of the Invention

Remarkably, it is possible to provide a cereal-based product that changes colour upon addition of an aqueous liquid such as milk, for example.

Consequently, in a first aspect the present invention provides claim 1.

In a second aspect the invention provides a process for obtaining the cereal-based product according to the present invention.

In a third aspect the invention provides a cereal product comprising at least two types of cereals, wherein one type of cereal is the cereal-based product according to the present invention.

An advantage of the present invention is that it provides a cereal-based product that gives a different experience and effect to the consumer than hitherto known products. The cereal-based product according to the invention may arouse the curiosity of the consumer and thus make a breakfast an unexpected happening or an interesting adventure.

Another advantage of the present invention is that the effect of colour change in cereal-based products may be achieved by standard technical equipment and on the base of natural food sources, if wished.

Yet another advantage of the present invention is that it provides a product that changes colour when an aqueous liquid such as milk is added.

### Detailed Description of the Invention

Within the context of this specification the word "comprises" is taken to mean "includes, among other things". It is not intended to be construed as "consists only of".

In the context of the present invention, the term "cereal-based product" is intended to include those products that are also known as breakfast cereals and that are consumed after addition of water, milk, juice or generally aqueous liquids. However, the products according to the invention are not restricted to breakfast, but may be consumed at any time during a day, for example as a convenient easy-to-prepare, in-between-meal or snack.

In the context of the present invention, the term "colour" is intended to cover also black and white. Hence, a colour change is also achieved when a cocoa-brown cereal-based product becomes white because the cocoa-coating is completely washed off.

In the context of the present invention, it is distinguished between a "dissolvable" or "first" as opposed to an "second" or "inner" colour. The dissolvable or first colour refers to the colour of the cereal-based product as it is visible during shelf-life or in the package before an aqueous liquid is added. The second colour is the colour that becomes visible only after dissolution of the dissolvable colour upon addition of the liquid. Hence, the second colour only becomes apparent at the moment of preparation of the cereal-based product, that is, when an aqueous liquid such as milk is added.

The terms "colour change", "changing or losing colour" refer to a visual effect, which is to be differentiated from circumstances where simply some of the coating dissolves upon addition of milk, for example. Many known breakfast cereals comprise a cocoa coating, which partially dissolves into milk for example. However, with these cereals, a clearly visible change of colour is not achieved, because substantial part of the coating sticks to or remains with the breakfast cereal. A colour change in the context of the present invention is a change that a consumer would clearly identify as a change in colour. For example: First brown, then white; first brown, then yellow or fawn, and so forth.

In the context of the present invention, a cereal based product is intended to be a product comprising at least 50%, preferably at least 70%, more preferably at least 80-90% by weight of dry matter of cereals, cereal derived matter or processed cereals, such as cereal flour, for example.

An aqueous liquid, in the context of the present invention, is a liquid comprising water that is usually added to breakfast cereals to prepare the meal. Examples are milk, reconstituted milk, juice, water, or other liquids, normally at the consumer's option.

Percentages in the context of the present invention are weight percentages of ingredients. Differing amounts of water may be present in a specific ingredient, which is clarified if necessary to describe the product or the method of obtaining it.

Preferably, in an embodiment of the cereal-based product according to the present invention it comprises a cereal base and at least one outer coating providing a dissolvable colour, which is quickly or easily dissolvable in an aqueous liquid.

In another embodiment, the cereal-based product further comprises an inner, protective coating between the cereal base and the at least one outer coating

In still another embodiment of the cereal-based product, the cereal base comprises at least 40% of rice flour.

In a further embodiment, the cereal base is an extruded cereal, for example, a cooked-extruded cereal. Preferably, it is a cooked-extruded-expanded cereal.

In still a further embodiment of cereal-based product according to the present invention, the outer coating provides the dissolvable colour and the inner coating prevents the dissolvable colour from attaching directly or permanently to the cereal base.

In yet a further embodiment, the outer coating is a cocoa-sugar solution and/or the inner coating is a sugar solution. For example, a cocoa-sugar solution may comprise, in percent by weight, 50-75% sugar, 5-20% cocoa powder and 10-30% water. A sugar solution may comprise 50-90% sugar and 50-10% water, for example.

In an embodiment, the cereal-based product is brown / cocoa, and which, upon addition of the aqueous liquid, changes its colour to white or fawn.

In an embodiment of the breakfast cereal according to the present invention, comprising at least two types of cereals, the at least two types of cereals are of similar shape and colour, whereby the colour is dissolvable with only one type.

In another embodiment of the breakfast cereal, the at least two types of cereals are of different shapes and of different dissolvable colours.

In still another embodiment, the different types of breakfast cereals have different shapes and dissolvable colours. Alternatively, in another embodiment, the breakfast cereals have different shapes and different second colours but a similar dissolvable colour.

The colour change or loss according to the present invention may be achieved by the following principle:

A cereal-base of a specific "inner" colour, such as a breakfast cereal, is coated with an outer coating providing an easily dissolvable colour, resulting in a cereal-based product displaying to a consumer the dissolvable colour, for example.

Upon addition of an aqueous liquid and if necessary, slight stirring, the outer coating is washed off or dissolved revealing to the consumer the cereal base with the inner colour. This corresponds to an embodiment of the present invention.

However, attention may be paid to the possibility that the outer coating adheres to the cereal base with the inner colour in a way that the addition of the aqueous liquid may not sufficiently wash off or dissolve the coated dissolvable colour. In other words, no clear or complete colour change is obtained, even upon slight stirring, because the cereal base retains spots of the outer coating providing the dissolvable colour.

For example, adhering or sticking of the outer coating may be found when cocoa-powder is used as part of the outer coating to provide brown as the dissolvable colour. If the coating comprising cocoa powder, or a coating with similar properties, is directly coated onto the cereal-base, a complete washing off or dissolution may not be achieved. In practice, this may often be the case, for example if it is wished that some of the cocoa of the coating will dissolve into the milk, to give a specific flavour and colour also to the milk. However, in these cases, a substantial part of the coating remains adhered to the cereal, having the consequence that not a real colour change in the sense of the present invention is obtained. An example of a breakfast cereal having a chocolate or cocoa coating is given in EP 1 051 922 A1.

If adhering of the outer coating to the cereal base is observed, it may be advantageous to apply an optional inner coating, between the cereal base and the outer coating, which prevents the outer coating from sticking or adhering directly to the cereal base. A cereal-base comprising an inner and an outer coating, the inner coating preventing the outer coating from sticking to the cereal base corresponds to a further embodiment of the present invention.

The inner coating thus may be defined as a protective coating, preventing the outer coating from sticking to the cereal base. The inner coating may, however, also be defined in terms of its function for easy washing off of the outer coating. Therefore, the inner coating may have properties that prevent an irreversible or intense sticking of the outer coating to it. If the cereal-based product according to the invention is exposed to an aqueous liquid, the outer coating, which provides a specific colour, is immediately washed off, because it does not stick or adhere to the inner coating due to the properties of the inner coating in relation to the outer coating.

As a variation, the cereal base may comprise a first coating providing an inner colour and a further coating providing a dissolvable colour, only the dissolvable coating/colour being washed off or dissolved upon addition of an aqueous liquid.

As a still further variation, the cereal base may comprise more than two coatings. For example,
- a first coating providing an inner, "second" colour,
- a second coating preventing the washing off / dissolution of the first coating, and,
- a third coating providing a "first", dissolvable colour which is washed off upon addition of an aqueous liquid.

The desired effect may also be achieved selecting or modifying a basic coating material providing a specific colour in a way that it is easy dissolvable in an aqueous liquid, such as milk, when coated onto a cereal-based product. This helps avoiding an inner, protective coating. For example, a coating may be provided that does only weakly attach to the breakfast cereal and that is therefore easily washed off when milk, etc, is added.

For the working of the present invention a suitable cereal-based product may first be prepared or commercially obtained. Principally, any cereal-base that is suitable as a breakfast cereal may be started with, for example. Likewise, any snack to be prepared by addition of milk or juice may be used.

Cereals are wheat, maize, barley, oat, rice, oat, millet and the like. Examples of suitable cereal-bases are crisps, flakes, puffs (oven or gun puffed), extruded, cooked-extruded and/or extruded-cooked-expanded cereals, for example. Hence, cereal-bases comprise, for example, rice or maize crisps, puffed rice or oat, any kind of flakes, baked or compressed and flaked cereals, toasted cereals and so forth.

The skilled person is generally aware of how to obtain different cereal-bases such as flakes, puffs, crisps, and other extruded cereals, for example. In "Breakfast Cereals and how they are made", edited by Fast and Caldwell, 2^{nd} edition 2000, published by the American Association of Cereal Chemists, Inc, St. Paul, USA, the preparation of all basic breakfast cereals may be found. Below a number of patent documents disclosing different kinds of cereal bases is given.

Preferably, the cereal base comprises, in percent by weight, at least 40%, preferably at least 50%, more preferably at least 60%, 70% or 80% of rice flour. For example, the cereal base comprises 60-75% rice flour. In selecting rice flour as a substantial component of the cereal-base, a substantially white or bright cereal base is obtained. This offers the possibility that the first colour of the cereal base be white, which will be displayed to the consumer if the outer coating is washed off upon addition of an aqueous liquid.

A further advantage of a rice-flour as a main ingredient of the cereal base is that it may be easily coloured by further food-grade colorants to provide a particular inner colour, if desired. For example, a blue, red, orange, yellow or green cereal base may be obtained by addition of the specific colorant at a suitable moment during the process of preparing the cereal base. By adding cocoa powder (3-10 wt.-%) to the dry mix, an extruded cereal base of a brown "inner" colour may be obtained.

Colorants may be added to the mix before extrusion. It is possible to add any food-grade colorants that will survive the conditions of extrusion-cooking or other way of preparing the cereal base, for example. Examples of possible food colorants suitable for extrusion are annatto, caramel, paprika extract, and turmeric. Legislation of different countries permits more or fewer colour agents for products obtained by cooking-extrusion.

Preferably, the cereal base may be a cooked-extruded cereal comprising rice flour. Such a cereal base may be obtained, for example, by mixing dry ingredients, in percent by weight, 90 to 99% of cereal flour, about 1% salt and about 0.5% processing aids to add up to 100% of the dry mix. Sucrose may, optionally, also be added, in amounts of 1.5-20%, preferably 2-15%, more preferably 3-9%. The cereal flour may comprise at least 40% and up to 100% rice flour. Preferably, it comprises at least 60%, more preferably at least 80% rice flour, more rice flour will support a brighter white colour of the extruded base.

An amount of about 2 to 7% oil and about 10 to 15% water, calculated as percentage of the total dry mix weight may be mixed together with the dry mix before feeding the complete mix into the extruder. The complete mix may have a water content of about 10 to 15%, preferably about 11 to 13%.

Any suitable extruder, such as a BC-72 type Clextral twin screw extruder having a screw diameter of 88 mm and a screw length of 1200 mm may be used, for example.

Cooking extrusion may be carried out at 100 - 200°C, under a pressure of 20-200 bars, the two intermeshing screws rotating at 200-400 rpm, preferably 240-370 rpm, for example. The cooked thermoplastic mass may thereafter be extruded through a die having, for example 1- 50, for example six round outlet openings or orifices with a diameter of about 0.5 - 4.0, preferably 1-3.5 mm. The thermoplastic mass may be extruded directly into ambient air, for example and immediately cut with a blade cutter rotating adjacent to the opening at 2500-6000 rpm, for example 5000-5300 rpm.

The extrusion parameters, the die and the cutting process may be modified as to vary the characteristics, such as the texture, shape, and so forth, of the extruded cereal base. In other words, any extruder, die or cutting device may be used to obtain an extruded cereal base comprising rice flour.

If the extruded base is intended to be of a different colour than white, it is possible to add "extrusion-grade" colorants into the dry mixture before feeding the complete mix into the extruder. In so doing, red, green, blue, orange, brown extruded bases may be obtained. The suitable amount of colorant to be added to the dry mixture depends strongly on the colouring power of the colorant. Usually, minute amounts are sufficient (below 5 wt.-%, preferably below 2%), but may have to be established in routine experiments for each colorant.

Before the cereal base is coated by an optional inner and an outer coating, it is preferably dried to a moisture content (percent by weight) of not more than 7%, preferably 1 to 5%, more preferably 1 to 4%, if necessary.

The outer coating providing the second colour may comprise any material or mixture of ingredients suitable to provide a specific colour and being washed off or dissolved upon addition of an aqueous liquid.

If it is wished to use natural ingredients, the outer coating may comprise, for example, cocoa powder to provide a second colour that is brown. In this case, a more distinctive colour change is obtained if the cereal-base is first coated with an inner, protective coating, because otherwise the cocoa will adhere to or even enter the cereal base to the end that the outer coating (cocoa) may not be washed off or dissolved completely.

The inner coating preventing the outer coating from adhering to the cereal-base is a coating based on a sugar syrup. Accordingly, 60-80%, of sugar and 20-40%, preferably 25-35% of water are mixed to form a syrup. Optionally, further ingredients that improve the coating properties or flavours may be added to the syrup. For example, up to 12%, preferably up to 8% calcium carbonate and up to 6%, preferably up to 4% vanillin may be added to the syrup. These two latter components improve the nutritional and organoleptical properties of the final product. They may be exchanged or supplemented by any other ingredient that modifies the taste, the texture or the nutritional property , for example, of the product. Thereafter, the syrup may be sprayed with spray nozzles in a continuously rotating coating drum or a batch enrober, for example, onto the cereal base to form the inner coating.

Any sugar may be suitable, such as sucrose, dextrose, fructose, invert sugar, glucose, in the form of syrup or in another form. While sugar based coatings are working very well, it may be envisaged to have a protective coating based on other ingredients. Any food grade ingredient may be used as a functional equivalent, as long as it provides a sufficient protective coating that prevents the outer, coloured coating from sticking to the cereal base.

The weight ratio of the cereal base to the syrup of the inner coating is in the range of 1/1 to 3/1, (50:50 to about 70:30, for example).

After addition of the optional first coating, a drying step will generally be necessary to obtain a coated extruded base with a water content of not more that 12%, preferably not more than 8%, for example approximately 2-4%. This may be done with any commercially available belt dryer, for example.

The advantage of an inner, protective coating based on sugar is that it is transparent or white. It is thus conceivable to add food-grade colorants to the syrup to the end that the first coating provides a first colour to the cereal base, for example.

As mentioned above, the outer coating may comprise cocoa powder providing a second colour that is brown. The outer coating may comprise, for example, 50-70%, preferably 55-65% sugar, 5-20%, preferably 10-15% cocoa powder, 5-20%, preferably 7-15% dextrose, up to 3% caramelised sugar syrup, up to 1% vanillin and 10-20% water. The components may be mixed and applied with spray nozzles in a continuously rotating coating drum or in a batch enrober, for example. However, any suitable coating apparatus may be used known to the skilled person.

After an outer coating is applied, a further drying step may be necessary if a shelf-stable product is wished. This is usually the case with breakfast cereals, for example. Therefore, the cereal base comprising an optional inner and an outer coating may be dried to a water content of not more that 5%, preferably not more than 3%.

The cereal based product according to the present invention may be packaged as it is or mixed with other cereals. For example, it is possible to provide the cereal based product as a breakfast cereals together with other breakfast cereal, that is a mixture of different breakfast cereals comprising the cereal based product according to the present invention.

In a particular embodiment, it is possible to provide to a consumer a breakfast cereal comprising the cereal based product according to the present invention, mixed with a cereal based product of identical shape, size and colour as the cereal of the invention, but not changing/ losing colour upon addition of water. In so doing, a special visual effect is created.

For example, a cocoa/chocolate-coloured, extruded cereal not changing/losing colour may be obtained by extruding-cooking cereal-based materials as described above (comprising, for example rice flour and/or maize flour and/or flours of other cereals, for example), whereby cocoa powder (3-10%, preferably 2-7%, more preferably 3-5%) is added to the mix prior extrusion-cooking to the end that the extruded product has a cocoa or chocolate brown colour which cannot be washed off upon addition of an aqueous liquid such as milk.

This extruded product may be mixed and packaged with the cereal-based product according to the present invention in any amounts to form the breakfast cereal product according to the invention. For example, a breakfast cereal product may comprise the two types of cereals in ratios of 1:9 to 9:1. In an embodiment, the cereal-based product is present, in a packaged breakfast cereal in percentages by weight of 5-50%, preferably 10-40%, more preferably 15-30%.

The following examples are given by way of illustration only and in no way should be construed as limiting the subject matter of the present application. Percentages and parts are by weight unless otherwise indicated.

### Example 1: Preparation of a white cereal base obtained by Extrusion-cooking

For the manufacturing of a base cereal, a mixture was prepared which had the following composition, (in parts, except added water):

| | In parts | In wt.-% of all ingredients (also liquid) |
|---|---|---|
| Rice flour | 92.7 | 79.2 |
| Sugar | 5 | 4.3 |
| Calcium carbonate | 1 | 0.8 |
| Salt | 0.8 | 0.7 |
| Processing aid | 0.5 | 0.4 |
| | | |
| Oil | 5 | 4.3 |
| Water | 12 | 10.3 |
| Total | 117 | 100 |

For preparing the mixture, the powders were mixed together to obtain a dry mix in a mixer manufactured by Prodima S.A.. The dry mix, oil and water were then mixed together in the extruder. The mixture obtained in this way was a cooked-extruded-expanded product with the aid of a BC-72 type Clextral twin screw extruder having a screw diameter of 88 mm and a screw length of 1200 mm.

Cooking extrusion was carried out at 155°C under 120 bar. The two intermeshing screws rotating at 320 rpm. The cooked thermoplastic mass obtained in this way was extruded through a die having six round outlet openings or orifices with a diameter of approximately 2.8 mm.

The thermoplastic mass was extruded into ambient air and immediately cut with a four blades cutter rotating adjacent to the opening at 5200 rpm.

The round balls obtained in this way expanded after cutting so that it was about 10mm in diameter. It had a water content of about 5% and a specific weight of approximately 105 g/l.

The base product was then dried with hot air in a fluidized dryer to a water content of 2.5%. The cereal base had a white colour.

### Example 2 : Coating of the cereal base with an inner coating for protection and an outer coating for providing colour

The product of Example 1 was coated with an inner and an outer coating.

A coating slurry was prepared with the following composition (wt.-%):

| | |
|---|---|
| Sucrose | 70 |
| Calcium carbonate | 2.0 |
| Vanillin | 0.1 |

Water was added to achieve 100 wt.-% (a total solids of around 70 wt.-%).

For preparing the slurry, the components were mixed together in a double walled tank while being heated to about 80°C.

In a coating drum of 70 cm in diameter and 150 cm in length, the slurry was applied with 5 spray nozzles while still hot, at a rate of 235 kg/hr base and 87.5 kg/hr slurry.

The freshly coated product was then dried with hot air on a belt dryer (a two-belt dryer, manufactured by Comessa) to a residual water content of approximately 3%.

Subsequently a second coating slurry was prepared with the following composition (wt.-%):

| | |
|---|---|
| Sucrose | 61 |
| Cocoa powder | 12.5 |
| Dextrose | 9 |
| Caramelised sugar syrup | 1 |
| Vanillin | 0.2 |

Water was added to achieve total solids of about 80 wt.-%.

For preparing the slurry, the components were mixed together in a double walled tank while being heated to about 80°C.

In a tumbler 70 cm in diameter and 150 cm in length, the slurry was applied with 5 spray nozzles while still hot, at a rate of 200 kg/hr base and 80 kg/hr slurry.

The freshly coated product was then dried with hot air on a belt dryer to a residual water content of 2.2%.

The coated product has a specific weight of approximately 180 g/l. The product has a round shape, has a dark brown appearance and a crunchy texture.

As a whole it has the following composition:

| | g/100g |
|---|---|
| Protein | 4.3 |
| Available carbohydrates | 84.7 |
| Fat | 5.1 |
| Dietary fibers | 1.5 |
| Ash | 2.2 |
| Water | 2.2 |

If an aqueous liquid is added to the product, the outer, cocoa-coloured coating will easily dissolve completely into the aqueous liquid and the white colour of the original cereal base (Example 1) becomes visible.

## Claims

1. A cereal-based product, **characterised in that** it changes or loses colour upon addition of an aqueous liquid, wherein the product comprises:
a) a cereal base having form of spherical balls
b) at least one outer coating providing a dissolvable colour, which is quickly or easily dissolvable in an aqueous liquid and
c) an inner coating between the cereal base and the at least one outer coating, the inner coating being a sugar syrup comprising 60-80% sugar and 20-40% water and the weight ratio of cereal base to syrup of the inner coating being in the range 1:1 to 3:1.

2. The cereal based product according to claim 1, wherein the cereal base comprises at least 40% by weight of rice and/or maize flour.

3. The cereal-based product according to claim 1, wherein the cereal base is an extruded cereal.

4. The cereal-based product according to claim 1, wherein the outer coating provides the dissolvable colour and the inner coating prevents the dissolvable colour from attaching directly or permanently to the cereal base.

5. The cereal-based product according to claim 1, wherein the outer coating is a cocoa sugar solution.

6. The cereal-based product according to claim 1, which is brown / cocoa, and which, upon addition of the aqueous liquid, changes its colour to white or fawn.

7. A process for obtaining a cereal-based product, comprising the steps of coating a cereal base which is in the form of spherical balls with an inner, protective coating, the inner coating being a sugar syrup comprising 60-80% sugar and 20-40% water and the weight ratio of cereal base to syrup of the inner coating being in the range 1:1 to 3:1, drying the coated breakfast cereal to a water content below 10 wt%, and coating the coated breakfast cereal with an outer coating, which is quickly dissolvable in an aqueous liquid

8. The process according to claim 7, wherein the outer coating is a cocoa/sugar coating.

9. A breakfast cereal product comprising at least two types of cereals, wherein one type of cereal is the cereal-based product according to any one of claims 1 to 6.

## Patentansprüche

1. Aus Zerealien hergestelltes Produkt, **dadurch gekennzeichnet, dass** es seine Farbe verändert oder verliert, wenn eine wässrige Flüssigkeit darauf gegeben wird, wobei das Produkt umfasst:
a) eine Zerealiengrundlage in der Form sphärischer Bälle,
b) zumindest eine äußere Beschichtung, die eine lösbare Farbe bereitstellt, welche schnell oder leicht in wässriger Flüssigkeit löslich ist, und
c) eine innere Beschichtung zwischen der Zerealiengrundlage und der zumindest einen äußeren Beschichtung, wobei die innere Beschichtung ein Zuckersirup ist, der 60-80 % Zucker und 20-40 % Wasser umfasst, und wobei das Gewichtsverhältnis der Zerealiengrundlage zu Sirup der inneren Beschichtung im Bereich von 1:1 1 zu 3:1 liegt.

2. Aus Zerealien hergestelltes Produkt nach Anspruch 1, wobei die Zerealiengrundlage zumindest 40 Gew.- % an Reis- und/oder Maismehl umfasst.

3. Aus Zerealien hergestelltes Produkt nach Anspruch 1, wobei die Zerealiengrundlage extrudierte Zerealien sind.

4. Aus Zerealien hergestelltes Produkt nach Anspruch 1, wobei die äußere Beschichtung die lösbare Farbe bereitstellt und die innere Beschichtung verhindert, dass die lösbare Farbe direkt oder dauerhaft an der Zerealiengrundlage haftet.

5. Aus Zerealien hergestelltes Produkt nach Anspruch 1, wobei die äußere Beschichtung eine Kakaozuckerlösung ist.

6. Aus Zerealien hergestelltes Produkt nach Anspruch 1, welches braun/kakaofarbig ist und welches nach Zugabe der wässrigen Flüssigkeit seine Farbe nach Weiß oder Beige verändert.

7. Verfahren, um ein aus Zerealien hergestelltes Produkt zu erhalten, umfassend die Schritte des
Beschichtens einer Zerealiengrundlage, welche in der Form sphärischer Bälle mit einer inneren, schützenden Schicht vorliegt, wobei die innere Beschichtung ein Zuckersirup ist, der 60-80 % Zucker und 20-40 % Wasser enthält, und wobei das Gewichtsverhältnis der Zerealiengrundlage zu Sirup der inneren Beschichtung im Bereich von 1:1 1 zu 3:1 liegt,
Trocknens der beschichteten Frühstückszerealien auf einen Wassergehalt unter 10 Gew.- % und des
Beschichtens der beschichteten Frühstückszerealien mit einer äußeren Beschichtung, welche in einer wässrigen Flüssigkeit leicht löslich ist.

8. Verfahren nach Anspruch 7, wobei die äußere Beschichtung eine Kakao/Zuckerbeschichtung ist.

9. Frühstückszerealienprodukt, das zumindest zwei Typen von Zerealien umfasst, wobei ein Typ der Zerealien das aus Zerealien hergestellte Produkt nach einem der Ansprüche 1 bis 6 ist.

## Revendications

1. Produit à base de céréales, **caractérisé en ce qu'**il change ou perd de sa couleur lors de l'addition d'un liquide aqueux, lequel produit comprend:
a) une base céréalière ayant la forme de boules sphériques
b) au moins un enrobage externe conférant une couleur soluble, qui est rapidement ou facilement soluble dans un liquide aqueux et
c) un enrobage interne entre la base céréalière et l'au moins un enrobage externe, l'enrobage interne étant un sirop de sucre comprenant 60 à 80 % de sucre et 20 à 40 % d'eau et le rapport en poids de la base céréalière au sirop de l'enrobage interne étant dans la gamme de 1:1 à 3:1.

2. Produit à base de céréales selon la revendication 1, dans lequel la base céréalière comprend au moins 40 % en poids de farine de riz et/ou maïs.

3. Produit à base de céréales selon la revendication 1, dans lequel la base céréalière est une céréale extrudée.

4. Produit à base de céréales selon la revendication 1, dans lequel l'enrobage externe confère une couleur soluble et l'enrobage interne empêche la couleur soluble de se fixer de manière directe ou permanente à la base céréalière.

5. Produit à base de céréales selon la revendication 1, dans lequel l'enrobage externe est une solution de sucre et de cacao.

6. Produit à base de céréales selon la revendication 1, qui est brun/couleur cacao, et dont la couleur, lors de l'addition du liquide aqueux, passe à blanc ou fauve.

7. Procédé permettant d'obtenir un produit à base de céréales, comprenant les étapes d'enrobage d'une base céréalière qui est sous la forme de boules sphériques avec un enrobage protecteur interne, l'enrobage interne étant un sirop de sucre comprenant 60 à 80 % de sucre et 20 à 40 % d'eau et le rapport en poids de la base céréalière au sirop de l'enrobage interne étant dans la gamme de 1:1 à 3:1, de séchage de la céréale pour petit-déjeuner enrobée à une teneur en eau inférieure à 10 % en poids et d'enrobage de la céréale pour petit-déjeuner enrobée avec un enrobage externe, qui est facilement soluble dans un liquide aqueux.

8. Procédé selon la revendication 7, dans lequel l'enrobage externe est un enrobage de cacao/sucre.

9. Produit céréalier pour petit-déjeuner comprenant au moins deux types de céréales, dans lequel un type de céréale est le produit à base de céréales selon l'une quelconque des revendications 1 à 6.
